# FASCICULE DE BREVET EUROPEEN

(11) **EP 2 947 365 B1**
(45) Date de publication et mention de la délivrance du brevet: **11.01.2017**
(21) Numéro de dépôt: 15156654.4
(22) Date de dépôt: 26.02.2015
(51) Int. Cl.: F16L 37/098

(54) **ELÉMENT MALE DE RACCORD FLUIDIQUE ET RACCORD COMPRENANT UN TEL ÉLÉMENT ET UN ÉLÉMENT FEMELLE COMPLÉMENTAIRE**
FLUIDSTECKANSCHLUSSELEMENT UND ANSCHLUSS, DER EIN SOLCHES STECKELEMENT UND EIN ENTSPRECHENDES ANSCHLUSSBUCHSENELEMENT UMFASST
MALE FLUID COUPLING ELEMENT AND COUPLING INCLUDING SUCH AN ELEMENT AND A COMPLEMENTARY FEMALE ELEMENT

(30) Priorité: 23.05.2014 FR 1454701
(43) Date de publication de la demande: 25.11.2015
(73) Titulaire: STAUBLI FAVERGES, 74210 Faverges (FR)
(72) Inventeur: Tiberghien, Alain-Christophe, 74320 SEVRIER (FR); Durieux, Christophe, 73200 GILLY SUR ISERE (FR)
(74) Mandataire: Lavoix

(56) Documents cités:
- WO-A1-2011/006591
- US-A- 4 026 581
- US-A- 4 781 400
- US-A1- 2006 208 484

## Description

L'invention concerne un élément mâle de raccord fluidique et un raccord comprenant un tel élément mâle et un élément femelle complémentaire.

Un raccord fluidique selon l'invention est particulièrement utilisé dans le domaine de l'industrie automobile. En effet, lors des phases de tests des moteurs de nouveaux véhicules, les moteurs sont installés sur des bancs d'essais, sur lesquels ils sont connectés temporairement à des circuits de fluide auxiliaires. Une fois les phases d'essais réalisées, les moteurs sont déconnectés de ces circuits auxiliaires pour être connectés définitivement à des circuits d'alimentation dans le compartiment moteur des véhicules. Les branchements sont réalisés à l'aide de raccords, qui sont rapidement connectables et déconnectables.

De manière connue, les raccords fluidiques des moteurs montés sur bancs d'essais comprennent un élément femelle en matière plastique qui dispose de griffes élastiques adaptées pour être accrochées sur une collerette d'une fiche mâle tubulaire de passage de fluide. Les cycles de montage et de démontage des moteurs et les opérations successives d'accouplement et de désaccouplement des raccords usent les griffes élastiques de l'élément femelle.

WO-A-2011/006591 divulgue un raccord fluidique comprenant un élément femelle de raccord connecté à une canalisation et une fiche tubulaire mâle de passage du fluide. L'élément femelle comprend des griffes élastiques qui retiennent une collerette de la fiche mâle. Pour désaccoupler la fiche mâle et l'élément femelle, l'opérateur manoeuvre des pattes disposées autour des griffes pour appuyer sur ces dernières et les faire basculer dans une configuration où elles ne sont plus en prise avec la collerette de la fiche mâle et où la fiche mâle peut être retirée de l'élément femelle. Ce désaccouplement n'est pas commode pour l'opérateur car celui-ci doit manoeuvrer des pièces difficilement accessibles. En outre, si l'opérateur n'appuie pas assez sur les griffes de verrouillage, celles-ci risquent d'être abîmées, voire arrachées au contact de la collerette, lors du retrait de la fiche mâle.

Pour pallier cet inconvénient, l'embout femelle de certains raccords est équipé d'un fourreau qui est mobile axialement et manoeuvré pour décrocher les griffes de la collerette en prise sur l'élément mâle en vue de déconnecter le raccord. Ce fourreau pousse en fait les griffes vers l'extérieur de sorte que la fiche mâle peut être retirée de l'élément femelle sans que les griffes de verrouillage ne soient accrochées par la collerette. Cependant, la manoeuvre du fourreau n'est pas sécurisée, c'est-à-dire que l'organe de commande du déplacement du fourreau n'est pas bloqué en configuration accouplée et un opérateur peu attentif peut désaccoupler le raccord par inadvertance ou mauvaise utilisation. De plus, ce système a l'inconvénient que les griffes sont amenées à s'user par frottement au contact de la collerette lorsqu'elles sont décrochées en force.

C'est à ces inconvénients qu'entend plus particulièrement remédier l'invention en proposant un élément mâle de raccord fluidique plus robuste et plus sécurisé.

A cet effet l'invention concerne un élément mâle de raccord fluidique, comprenant :
- un corps tubulaire, qui définit un axe central et une embouchure distale, et
- une fiche tubulaire de passage du fluide, qui est disposée coaxialement à l'intérieur du corps, qui dépasse axialement du corps et qui comporte une collerette d'accrochage d'une ou de plusieurs griffes d'un élément femelle,
Conformément à l'invention, l'élément mâle comprend en outre :
- un manchon, qui est mobile axialement autour de la fiche entre une première position, où il est éloigné de la collerette et une deuxième position, où il est proche de ou en butée contre la collerette,
- un organe de commande du déplacement du manchon de sa première à sa deuxième position, et
- un dispositif de verrouillage de l'organe de commande, comprenant :
   - une première partie apte à coulisser à l'intérieur du corps autour de la fiche tubulaire entre une position distale de la première partie où elle empêche la manoeuvre de l'organe de commande et une position proximale de la première partie où elle ne s'oppose pas à une manoeuvre de l'organe de commande pour déplacer le manchon de sa première vers sa deuxième position, et
   - une deuxième partie, qui est apte à coulisser à l'intérieur du corps autour de la fiche tubulaire entre une position distale de la deuxième partie et une position proximale de la deuxième partie, qui est apte à entrainer la première partie du dispositif de sa position distale vers sa position proximale et qui présente une extrémité distale accessible à l'embouchure du corps.

Grâce à l'invention, la présence du manchon de déblocage permet d'écarter axialement puis de dégager radialement chaque griffe de la collerette avant le retrait de l'élément mâle hors de l'élément femelle. Ainsi, la ou les griffes ne risquent pas de buter contre la collerette de la fiche de l'élément mâle lors du désaccouplement et sont moins sollicitées à long terme. En outre, la bague de verrouillage empêche la manoeuvre de l'organe de commande en position distale, ce qui prévient une action malencontreuse de l'opérateur sur l'organe de commande. Pour désaccoupler le raccord, l'opérateur doit d'abord rapprocher davantage l'élément mâle et l'élément femelle pour repousser la bague de verrouillage en position proximale, ce qui est plus sécurisé. Cela permet en effet d'éviter un désaccouplement involontaire du raccord, suite à une action malencontreuse d'un opérateur sur l'organe de commande. Cela permet également d'éloigner les griffes d'accroche de la collerette de l'élément mâle avant de les écarter afin d'épargner l'usure des griffes contre la collerette.

Selon des aspects avantageux mais non obligatoires de l'invention, un élément mâle de raccord fluidique peut comporter une ou plusieurs des caractéristiques suivantes, prises dans toute combinaison techniquement admissible :
- L'élément mâle comprend un organe élastique de compression, qui est en appui entre, d'une part, la deuxième partie du dispositif de verrouillage et, d'autre part, le manchon apte à assurer le rappel de la deuxième partie dans sa position distale et du manchon dans sa première position.
- L'organe de commande comprend un levier articulé sur le corps autour d'un axe orthoradial à l'axe central et en ce que le levier comprend un doigt de poussée du manchon vers sa deuxième position, qui s'étend à travers une ouverture de la première partie du dispositif de verrouillage.
- Le levier comporte un talon de blocage du pivotement du levier, qui bute contre la première partie du dispositif de verrouillage lorsque celle-ci est en position distale.
- Le manchon a un diamètre extérieur supérieur au diamètre de la collerette de la fiche.
- La première partie du dispositif de verrouillage est une bague de verrouillage et la deuxième partie du dispositif de verrouillage est une bague de palpage qui est décalée axialement, le long de l'axe central par rapport à la bague de verrouillage, et qui est apte à repousser la bague de verrouillage vers sa position proximale.
- La bague de palpage est mobile axialement par rapport au corps sans entraîner la bague de verrouillage entre sa position distale et une position intermédiaire, où elle prend contact avec la bague de verrouillage.
- L'élément comprend un organe exerçant un effort de rappel élastique de la bague de verrouillage dans sa position distale.
- Le dispositif de verrouillage est un ensemble monobloc constitué d'une première partie proximale et d'une deuxième partie distale, l'ensemble étant mobile entre une position distale où la partie proximale du dispositif de verrouillage empêche la manoeuvre de l'organe de commande, et une position proximale où la partie proximale du dispositif ne s'oppose pas à une manoeuvre de l'organe de commande.
- La fiche tubulaire comprend une partie proximale et une partie distale, portant la collerette et mobile axialement par rapport au corps à l'encontre de l'effort de rappel d'un ressort entre une position avancée et une position reculée.
- La partie proximale de la fiche est fixe par rapport au corps, alors que la fiche comporte une bille de butée de la partie distale de la fiche dans sa position avancée.

L'invention concerne également un raccord fluidique comportant un élément mâle tel que décrit précédemment et un élément femelle comportant au moins une griffe, ayant une surface d'accrochage à la collerette de l'élément mâle. Le manchon est apte à dégager chaque griffe lorsque celui-ci est déplacé de sa première vers sa deuxième position.

Selon des aspects avantageux mais non obligatoires de l'invention :
- L'élément femelle comprend un poussoir, ayant une surface de poussée de l'extrémité de la deuxième partie du dispositif de verrouillage, cette extrémité étant accessible au poussoir à l'embouchure du corps.
- Une distance entre la surface d'accrochage et la surface de poussée est supérieure à une distance, mesurée parallèlement à l'axe central, entre une face de blocage appartenant à la collerette et la surface de contact, avec l'élément femelle, de la deuxième partie du dispositif de verrouillage dans sa position distale.
- La première partie du dispositif de verrouillage empêche la manoeuvre de l'organe de commande lorsque la surface d'accrochage de la griffe est en prise avec la collerette de l'élément mâle.
- L'organe de commande est manoeuvrable après rapprochement des éléments mâle et femelle par rapport à une configuration accouplée du raccord.

L'invention et d'autres avantages de celle-ci apparaîtront plus clairement à la lumière de la description qui va suivre de plusieurs modes de réalisation d'un élément mâle, d'un élément femelle et d'un raccord fluidique conformes à son principe, donnée uniquement à titre d'exemple et faite en référence aux dessins dans lesquels :
- les figures 1 à 6 sont des coupes longitudinales d'un raccord fluidique conforme à l'invention et comprenant un élément mâle conforme à l'invention et un élément femelle, ces coupes représentant les étapes successives d'accouplement et de désaccouplement du raccord,
- la figure 7 est une vue à plus grande échelle de l'encadré VII de la figure 1,
- la figure 8 est une vue à plus grande échelle de l'encadré VIII de la figure 3,
- la figure 9 est une vue en perspective d'un élément femelle du raccord fluidique des figures 1 à 8, représenté avec une partie en demi-coupe pour une meilleure visualisation,
- la figure 10 est une vue en perspective, analogue à la figure 9, d'une variante de construction de l'élément femelle du raccord des figures 1 à 6,
- les figures 11 et 12 sont des coupes longitudinales respectivement analogues aux figures 1 et 5, qui représentent un raccord fluidique comprenant un élément mâle conforme à un deuxième mode de réalisation de l'invention, et
- les figures 13 à 15 sont des coupes longitudinales qui représentent les étapes de désaccouplement d'un raccord fluidique comportant un élément mâle conforme à un troisième mode de réalisation de l'invention.

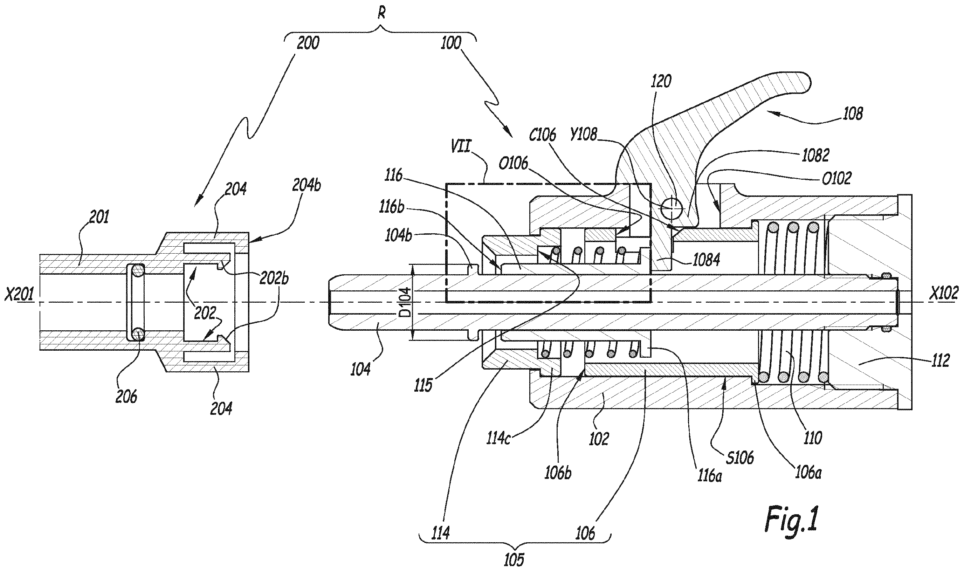

Sur la figure 1 est représenté un raccord fluidique R dans une configuration désaccouplée. Ce raccord R est adapté au passage de tout type de fluide, que ce soit un liquide ou un gaz. Le raccord fluidique R comprend un élément mâle 100 et un élément femelle 200. Les éléments 100 et 200 sont en pratique chacun raccordés à une canalisation qui n'est pas représentée, pour la clarté du dessin.

L'élément mâle 100 comporte un corps extérieur 102, qui est à géométrie globalement tubulaire, centrée sur un axe X102. Hormis les joints d'étanchéité, les pièces constitutives de l'élément mâle 100 sont toutes en métal. Elles sont en outre simples de fabrication, ce qui résulte en un raccord R bon marché.

Dans la suite de la description, une orientation « distale », ou « avant », d'un élément de raccord désigne une direction axiale tournée vers l'élément de raccord complémentaire, dans la configuration de la figure 1, alors qu'une orientation « proximale », ou « arrière », d'un élément de raccord désigne une direction axiale tournée à l'opposé par rapport à l'élément de raccord complémentaire. Par exemple, dans le cas de l'élément mâle 100, la direction distale est orientée vers l'élément femelle 200, alors que la direction proximale est tournée à l'opposé par rapport à l'élément femelle 200. Pour un meilleur repérage, les éléments disposés de manière distale au sein d'un élément de raccord ont une référence suivie de la lettre « b », alors que les éléments disposés de manière proximale au sein de l'élément de raccord ont une référence suivie de la lettre « a ».

Le corps 102 délimite une embouchure distale 102.1 et un épaulement interne 102b disposé du côté de son embouchure distale 102.1., Le corps 102 délimite également un autre épaulement interne 102a, qui est disposé de manière proximale par rapport à l'épaulement 102b. Le corps 102 comprend en outre une ouverture 0102 de passage d'un organe de commande 108.

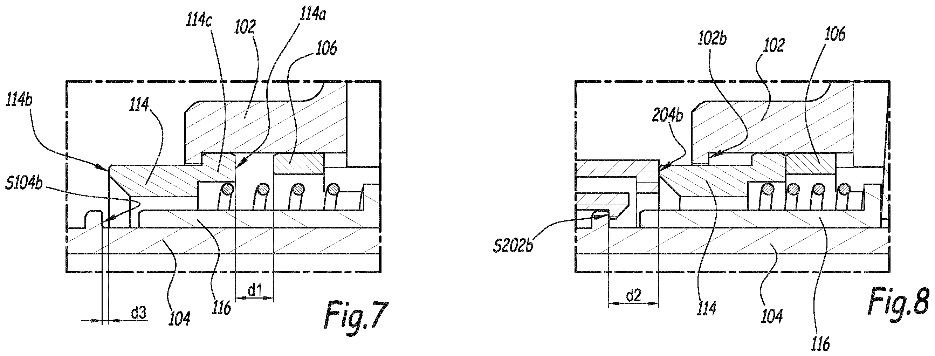

Une fiche tubulaire 104 de passage du fluide est disposée coaxialement à l'intérieur du corps 102 et dépasse de manière distale de celui-ci. La fiche 104 est une fiche mâle, qui comporte une collerette 104b d'accroche avec l'élément femelle 200. Comme visible à la figure 7, cette collerette 104b comporte une face de blocage S104b de griffes 202 de l'élément femelle 200. Cette face S104b est une surface annulaire disposée du côté proximal de la collerette 104b.

L'élément mâle 100 comprend également un manchon « dégriffeur » 116, qui est adapté pour dégager les griffes 202 de l'élément femelle 200 et qui est mobile axialement sous l'action de l'organe de commande 108. Le manchon 116 est disposé coaxialement autour de la fiche 104. Il comprend une couronne proximale 116a, avec laquelle coopère l'organe de commande 108 et une extrémité distale 116b, qui est adaptée pour coopérer avec l'élément femelle 200. Le manchon 116 est mobile axialement autour de la fiche 104 entre une première position, où il n'interagit pas avec les griffes 202 et une deuxième position, où il est apte à dégager les griffes 202 de la collerette 104. La première position est une position d'accouplement, alors que la deuxième position est une position de désaccouplement.

L'élément mâle 100 comprend un dispositif 105 de verrouillage de l'organe de commande, constitué d'une première partie 106 et d'une deuxième partie 114 aptes à coulisser à l'intérieur du corps 102 autour de la fiche tubulaire 104.

La première partie du dispositif de verrouillage 105 est une bague 106 de verrouillage de l'organe de commande 108, qui est disposée coaxialement à l'intérieur du corps 102. Plus précisément, la bague 106 est disposée coaxialement autour du manchon 116. La bague 106 est adaptée pour être repoussée axialement par l'élément femelle 200, entre une position distale où elle empêche la manoeuvre de l'organe de commande 108, et une position proximale où elle ne s'oppose pas à une manoeuvre de l'organe de commande 108 pour déplacer le manchon de sa première vers sa deuxième position. La bague de verrouillage 106 délimite également une ouverture 0106 de passage de l'organe de commande 108. Un bord proximal de l'ouverture 0106 comporte un chanfrein C106. Par ailleurs, la bague de verrouillage 106 comporte, du côté proximal, une couronne périphérique externe d'extrémité 106a. On note 106b l'extrémité distale de la bague de verrouillage. L'épaulement 102a du corps 102 forme un épaulement de butée de la couronne 106a de la bague de verrouillage 106 dans son déplacement vers l'avant, sous un effort élastique E110 exercé par un organe élastique de compression tel qu'un ressort 110.

La seconde partie du dispositif de verrouillage est une bague de palpage, ou bague « palpeuse », 114 qui est agencée coaxialement autour du manchon 116 et comporte une extrémité proximale 114a, adaptée pour coopérer avec la bague de verrouillage 106 et une extrémité distale 114b, adaptée pour coopérer avec l'élément femelle 200 car elle est décalée axialement par rapport à la bague de verrouillage 106 et accessible à l'élément femelle 200 au niveau de l'embouchure 102.1 du corps 102. La bague de palpage 114 dépasse du corps 102. La bague de palpage 114 est agencée axialement du côté distal par rapport à la bague de verrouillage 106 et est apte à coopérer avec l'élément femelle 200 pour repousser la bague de verrouillage 106 vers sa position proximale. La bague de palpage 114 est mobile axialement au contact de l'élément femelle 200 entre une position distale, où elle ne coopère pas avec l'élément femelle 200, une position intermédiaire, où elle prend contact avec la bague de verrouillage 106, alors en position distale, et une position proximale où elle est en contact avec la bague 106, alors elle-même en position proximale. Dans les positions intermédiaire et proximale, l'extrémité proximale 114a de la bague de palpage 114 est au contact de l'extrémité distale 106b de la bague de verrouillage 106 et la bague de palpage coopère avec l'élément femelle 200. La bague de palpage 114 délimite également un épaulement interne 115. Par ailleurs, la bague de palpage 114 comprend une collerette externe proximale 114c.

En configuration désaccouplée, d1 désigne la distance, mesurée parallèlement à l'axe X102, entre l'extrémité proximale 114a de la bague de palpage 114 et l'extrémité distale 106b de la bague de verrouillage 106 et d3 désigne la distance, mesurée parallèlement à l'axe X102, entre l'extrémité distale 114b de la bague de palpage 114 en position distale et la face de blocage S104b de la collerette 104b.

Un ressort spiral 118 est intercalé entre l'épaulement 115 de la bague de palpage 114 et la couronne 116a du manchon 116. Il comprend donc une première spire en appui contre l'épaulement 115 de la bague de palpage 114 et une dernière spire en appui contre la couronne proximale 116a du manchon 116. Ce ressort 118 est centré sur l'axe X102 et forme un moyen de rappel élastique de la bague de palpage 114 vers sa position distale. Le ressort 118 exerce un effort élastique E118 à la fois sur la bague de palpage 114 et sur le manchon 116. Le ressort 118 forme également un moyen de rappel élastique du manchon 116 dans sa première position. Par ailleurs, la bague de palpage 114 est arrêtée dans son mouvement vers l'avant par le contact de sa collerette 114c avec l'épaulement 102b du corps 102.

L'organe de commande 108 est un levier, qui est articulé autour d'un axe Y108 et qui est manoeuvrable avec le pouce. L'axe Y108 est orthoradial par rapport à l'axe X102. Plus précisément, le levier 108 s'articule autour d'un arbre 120 monté sur le corps 102, qui est à section circulaire et qui est centré sur l'axe Y108. Le levier 108 comprend un doigt 1084 de poussée du manchon 116. Ce doigt 1084 s'étend à travers l'ouverture 0206 de la bague de verrouillage 106 et est en appui contre la couronne proximale 116a du manchon 116. Le levier 108 comporte également un talon 1082 de blocage du pivotement du levier 108, qui bute contre la bague de verrouillage 106 lorsque celle-ci est en position distale. Plus précisément, le talon 1082 bute contre la surface radiale extérieure S106 de la bague de verrouillage 106. Le talon 1082 est de forme carrée, avec un congé arrondi.

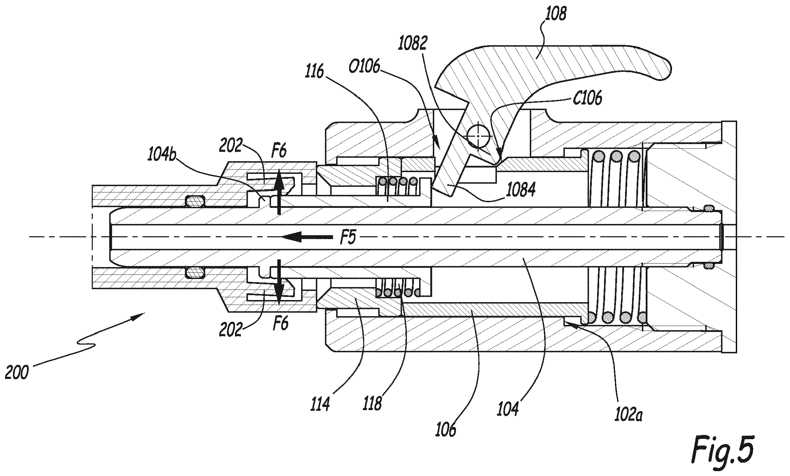

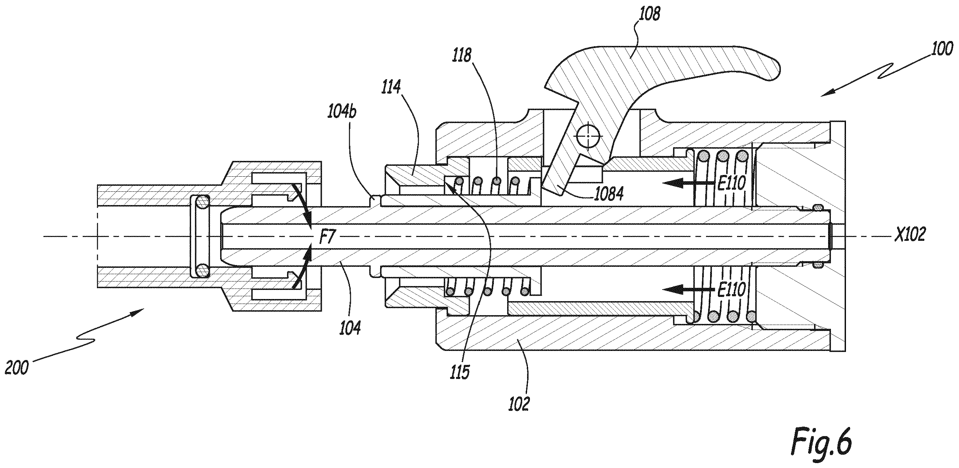

Le levier 108 est pivotable entre une configuration relevée, représentée aux figures 1 à 4 et une configuration baissée, représentée aux figures 5 et 6.

Le ressort 110 est un ressort de rappel de la bague de verrouillage 106 en position distale. Il est intercalé entre la couronne proximale 106a de la bague de verrouillage 106 et une pièce 112 de centrage de la fiche 104 dans le corps 102, cette pièce de centrage 112 étant disposée de manière proximale dans l'élément mâle 100. La pièce de centrage 112 délimite un logement de réception de la fiche 104. Le ressort 110 est un ressort spiral centré sur l'axe X102. Il comprend une première spire en appui contre la couronne 106a et une dernière spire en appui contre la pièce 112. Il exerce un effort élastique E110 sur la bague de verrouillage 106.

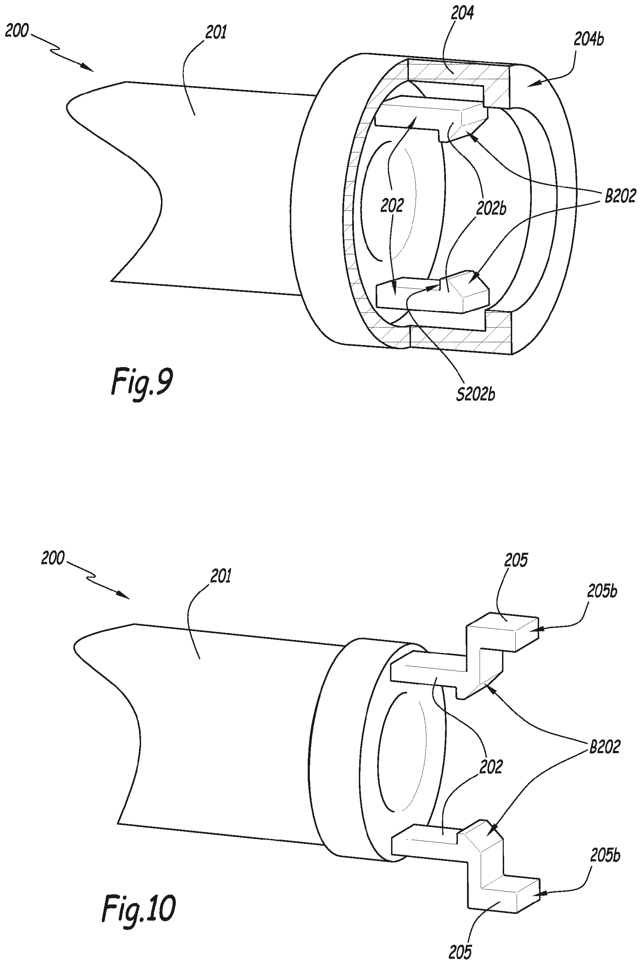

L'élément femelle 200 est globalement tubulaire et centré sur un axe X201. L'élément femelle 200 est un embout en matière plastique. Il comporte un corps tubulaire 201 et deux griffes élastiques 202 qui se prolongent de manière distale par rapport au corps 201. Les griffes 202 comprennent une partie d'extrémité distale 202b qui fait saillie radialement à l'intérieur du corps 201. Cette partie d'extrémité 202b est adaptée pour s'accrocher sur la collerette 104b de la fiche mâle 104. Comme mieux visible à la figure 9, la partie d'extrémité 202b des griffes 202 comporte une surface d'accroche proximale S202b avec la face de blocage S104b de la collerette 104b. Par ailleurs, la surface S202b de chaque griffe 202 s'étend dans un plan perpendiculaire à l'axe X201 lorsque la griffe 202 n'est pas déformée, notamment dans les configurations représentées aux figures 1 à 9. La partie d'extrémité 202b des griffes 202 comporte un bord en biseau B202, destiné à venir au contact de la collerette 104b à l'accouplement. Ce bord en biseau permet aux griffes 202 de se déformer élastiquement pour surmonter la collerette 104b lors de l'accouplement. L'élément femelle 200 comprend également un poussoir 204, qui est tubulaire et qui entoure les griffes élastiques 202. Ce poussoir 204 comprend une surface distale 204b de poussée de l'extrémité distale 114b de la seconde partie 114 du dispositif de verrouillage, qui est la bague de palpage 114.

d2 désigne la distance, mesurée parallèlement à l'axe X201, entre la surface d'accroche S202b des griffes 202 et la surface de poussée 204b appartenant au poussoir 204. L'élément femelle 200 comprend par ailleurs un joint torique d'étanchéité 206, qui est disposé dans une gorge périphérique interne du corps 201. Le corps 201, le poussoir 204 et les griffes 202 sont d'un seul tenant.

Pour accoupler le raccord R, il convient tout d'abord de placer les éléments 100 et 200 en vis-à-vis, en alignant les axes X201 et X102.

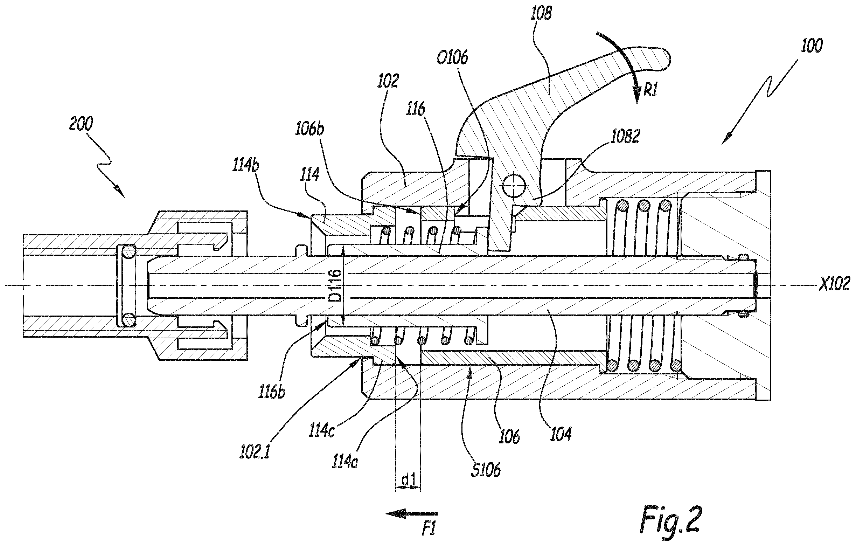

Ensuite, il convient d'insérer une partie de l'élément mâle 100 dans l'élément femelle 200. Ce mouvement est représenté à la figure 2 par une flèche F1. Comme visible sur cette figure, il est impossible de basculer le levier 108 dans cette configuration puisque la manoeuvre de basculement R1 du levier 108 est empêchée par le talon 1082 qui bute contre la surface extérieure S106 de la bague de verrouillage 106.

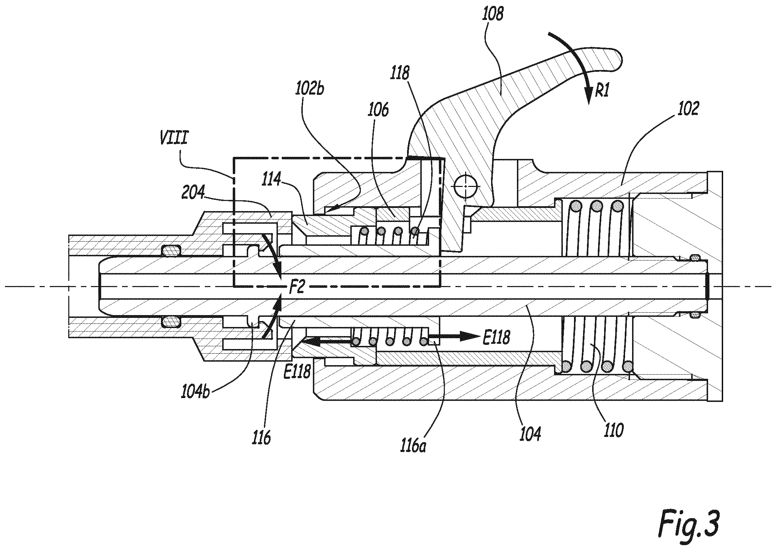

Lorsque l'on rapproche davantage l'élément mâle 100 de l'élément femelle 200, la bague de palpage 114 est repoussée axialement vers l'arrière, à l'encontre de l'effort élastique du ressort 118. Autrement dit, le ressort 118 est comprimé contre la couronne proximale 116a du manchon 116. La bague de palpage 114 est mobile axialement par rapport au corps 102 et passe donc de sa position distale représentée à la figure 2 à sa position intermédiaire représentée à la figure 3, où son extrémité proximale 114a est en contact avec l'extrémité distale 106b de la bague de verrouillage 106, sans l'entraîner. La course de la bague 114 entre ces deux positions correspond à une course morte puisqu'elle n'entraine pas de déplacement de la bague de verrouillage 106. Cette course morte a une longueur égale à la distance d1.

En parallèle, les griffes 202 de l'élément femelle 200 sont élastiquement déformées vers l'extérieur, selon une direction globalement radiale à l'axe X201 et centrifuge, au contact de la collerette 104b de la fiche 104. Dès que la partie d'extrémité 202b des griffes 202 a dépassé la collerette 104b, les griffes 202 reprennent leur forme initiale par retour élastique, comme représenté par les flèches F2 à la figure 3. La surface d'accroche S202b des griffes 202 vient alors en prise sur la face de blocage S104b de la collerette 104b, ce qui empêche le retrait de l'élément mâle 100 hors de l'élément femelle 200. Le raccord R se trouve alors dans la configuration accouplée.

La distance d2 entre la surface d'accroche S202b et la face de poussée 204b du poussoir 204 est inférieure ou égale à la distance d1 séparant la bague de palpage 114 et la bague de verrouillage 106 en configuration désaccouplée du raccord R. Comme mentionné ci-dessus, cette distance d1 correspond à la course de la bague de palpage 114 entre sa position distale et sa position intermédiaire. L'élément femelle 200 est donc conçu pour que la bague de palpage 114 rattrape au maximum son jeu d1 avec la bague de verrouillage 106 lors de l'accouplement. Dans l'exemple considéré, d1 est égal à d2 de sorte que la bague de palpage 114 rattrape son jeu d1 avec la bague de verrouillage 106 lors de l'accouplement, sans pour autant déplacer la bague 106. L'accouplement de l'élément mâle 100 avec l'élément femelle 200 n'entraîne donc pas de déplacement de la bague de verrouillage 106 vers l'arrière et le risque, que la bague de verrouillage 106 soit maintenue en position proximale en configuration accouplée et ne s'oppose donc jamais à la manoeuvre du levier, est écarté. Cela garantit donc la sécurité de la connexion du raccord R.

Par ailleurs, la fiche mâle 104 est insérée dans le corps 201 au-delà du joint d'étanchéité 206, de manière à réaliser une connexion fluidique étanche des canalisations mâle et femelle.

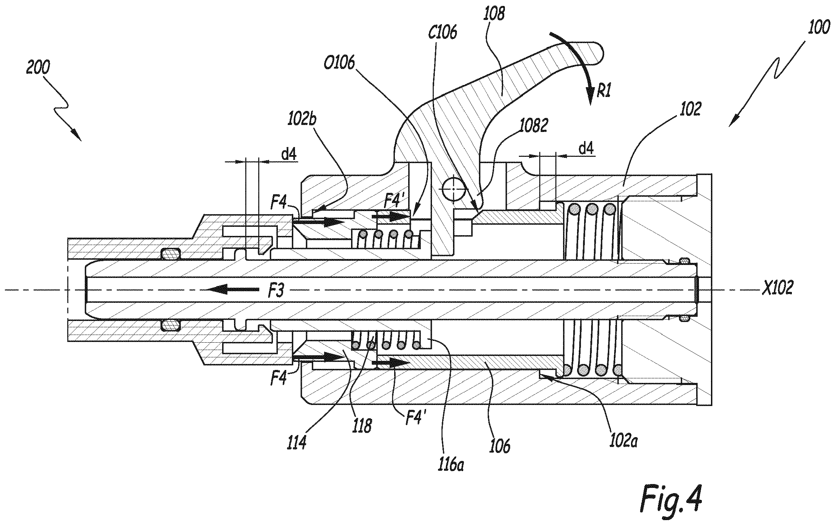

Pour désaccoupler le raccord R, il convient de rapprocher l'élément femelle 200 de l'élément mâle 100, c'est-à-dire d'engager plus profondément la fiche 104 dans le corps 201, d'une distance prédéfinie d4. Pour cela, l'opérateur doit pousser l'élément mâle 100 davantage à l'intérieur de l'élément femelle 200, comme représenté par la flèche F3 à la figure 4. Ce déplacement supplémentaire F3 implique que les griffes 202 de l'élément femelle 200 s'écartent, ou s'éloignent axialement, de la face de blocage S104b de la collerette 104b. Ce déplacement supplémentaire F3 de l'élément mâle 100 induit également que l'élément femelle 200 pousse la bague de palpage 114 qui, à son tour, pousse la bague de verrouillage 106 vers l'arrière, comme représenté par les flèches F4 et F4' à la figure 4.. La bague de palpage 114 passe donc de sa position intermédiaire à sa position proximale, à l'encontre de l'effort élastique E118 du ressort 118 et la bague de verrouillage 106 passe de sa position distale à sa position proximale, à l'encontre de l'effort élastique E110 du ressort 110. L'opérateur doit maintenir l'élément femelle 200 sur l'avant, pour empêcher le retour élastique de la bague de verrouillage 106. En position proximale, l'ouverture 0106 est en regard radial de l'ouverture 0102 de passage du levier 108, et dans laquelle le talon 1082 n'est plus en appui contre la surface extérieure S106 de la bague 106. L'ouverture 0106 est donc assez large et suffisamment reculée en regard de l'ouverture 0102 pour laisser passer le talon 1082.

La course de la bague 106 entre sa position distale et sa position proximale et la course de la bague de palpage 114 entre sa position intermédiaire et sa position proximale sont donc égales à la distance d4 de rapprochement, nécessaire à la libération du levier 108. Lorsque la bague 106 parvient en position proximale, il est possible de basculer le levier 108 sans que le talon 1082 bute contre la surface externe S106 de la bague de verrouillage 106, comme représenté par la flèche R2 à la figure 4. La bague de verrouillage 106 empêche l'actionnement du levier 108 tant que les éléments 100 et 200 n'ont pas été rapprochés de la distance d4, qui dépend du positionnement de l'ouverture 0106 et de la forme du levier 108, autrement dit tant que la collerette 104b de la fiche 104 n'a pas été suffisamment éloignée dans le corps 201 par rapport aux griffes 202. Le mouvement de pivotement R2 du levier 108 autour de l'axe Y108 est facilité par la présence du chanfrein C106 délimité sur le bord proximal de l'ouverture 0106 et par le congé arrondi du talon 1082. Il est donc indispensable de rapprocher l'élément mâle et l'élement femelle du raccord pour permettre la manoeuvre de l'organe de commande.

Le pivotement R2 du levier 108 est effectué entre sa configuration relevée et sa configuration baissée et entraîne que le doigt 1084 pousse le manchon « dégriffeur » 116 dans sa deuxième position, comme représenté par la flèche F5 à la figure 5. En configuration relevée du levier 108, le manchon 116 se trouve dans sa première position alors qu'en configuration baissée du levier 108, le manchon « dégriffeur » 116 se trouve dans sa deuxième position.

Le déplacement F5 du manchon 116 vers l'avant se fait à l'encontre de l'action élastique E118 du ressort 118. Autrement dit, le ressort 118 est comprimé lors du déplacement du manchon 116 vers l'avant. L'extrémité distale 116b du manchon 116 est entraîné vers la collerette 104b lors du pivotement R2 du levier 108 et dégage les griffes 202 de l'élément femelle 200 vers l'extérieur, notamment de manière globalement centrifuge, comme représenté par les flèches F6 à la figure 5. En effet, les bords biseautés B202 des griffes 202 sont orientés de telle sorte que l'appui de l'extrémité distale 116b du manchon 116 sur les bords B202 entraine une déformation élastique selon une direction globale centrifuge. Comme expliqué précédemment, lorsque les griffes 202 sont dégagées vers l'extérieur, celles-ci sont maintenues écartées de la collerette 104b de la distance d4, ce qui permet avantageusement que la surface d'accrochage S202b des griffes 202 ne frotte pas contre la face de blocage S104b de la collerette 104b. Cela permet en outre que le manchon 116 ne vienne pas écraser les griffes 202 contre la collerette 104b lors de son déplacement entre sa première et sa deuxième position. Il n'y a donc pas de risque d'écraser ou d'arracher les griffes 202 lors du désaccouplement et l'usure des griffes 202 au fil des opérations successives de connexion et de déconnexion est réduit. L'extrémité distale 116b vient finalement buter sur la collerette 104b. Les griffes 202 sont dégagées et le contact entre le manchon 110 et la collerette 104b est maintenu de sorte que l'élément mâle peut être retiré sans risque que la face de blocage S104b de la collerette 104b n'accroche les griffes à la déconnexion.

Lors du retrait de l'élément mâle 100 hors de l'élément femelle 200, les griffes 202 reprennent leur forme initiale par retour élastique, comme représenté par les flèches F7 à la figure 6.

Par ailleurs, la distance d2 entre la surface d'accroche S202b et la surface de poussée 204b est supérieure à la distance d3, mesurée parallèlement à l'axe central X102, entre la surface 114b de contact de la bague de palpage 114 en position distale avec l'élément femelle 200 et la face de blocage S104b appartenant à la collerette 104b. Ainsi, le mouvement de désaccouplement du raccord fluidique R s'accompagne par la poussée de la bague de palpage 114 contre le poussoir 204 de l'élément femelle 200 puisque la bague de palpage 114 est soumise à l'effort élastique du ressort 118 vers l'avant, c'est-à-dire en direction de l'élément femelle 200. La bague de palpage 114 passe donc de sa position proximale à sa position distale. La course de la bague 114 entre ces deux positions est égale à la valeur de la surcourse d4 nécessaire à la libération du levier 108, plus la course morte d1. La course morte d1 permet d'éjecter l'élément femelle 200 sous l'effort élastique du ressort 118. Autrement dit, au désaccouplement, l'élément femelle 200 est éloigné automatiquement de l'élément mâle 100 d'une distance correspondant à la longueur d1 de la course morte. L'opérateur n'a donc pas besoin de tirer sur l'élément mâle 100 pour dégager les griffes 202 de la collerette 104b, qui sont éloignées automatiquement à distance de la face de blocage de la collerette sans risque de reconnexion involontaire du raccord au relâchement du levier. L'effort de dégagement des griffes 202 est maitrisé par la raideur du ressort 118. Cela permet de désaccoupler le raccord R sans endommager les griffes élastiques 202 et de manière automatique.

Le diamètre extérieur du manchon 116 est supérieur au diamètre extérieur D104 de la collerette 104b, si bien que le retrait de l'élément mâle 100 hors de l'élément femelle 200 se fait sans que les griffes 202 ne s'accrochent à la collerette 104b. Il n'y a donc pas de risque d'écrasement des griffes élastiques 202 au contact de la collerette 104b lors de la manoeuvre de déconnexion.

Une fois que le raccord R est désaccouplé, l'opérateur relâche la pression sur le levier 108, qui se relève alors automatiquement par retour élastique du manchon 116 vers sa première position, sous l'effort élastique E118 du ressort 118. De même, la bague 106 revient en position distale sous l'effort élastique E110 du ressort 110.

Sur la figure 10 est représentée une variante de construction d'un élément femelle 200. L'élément femelle 200 de la figure 10 diffère de celui de la figure 9 en ce qu'il ne comprend pas de poussoir tubulaire mais des pattes 205 de poussée de la bague de palpage 114. Ces pattes de poussée 205 sont supportées par les griffes 202 et sont coudées. Elles comportent une face de poussée 205b, qui est prévue pour venir au contact de l'extrémité distale 114b de la bague de palpage 114. La construction de l'élément mâle et le fonctionnement du raccord à l'accouplement et au désaccouplement restent similaires à ce qui a été décrit précédemment.

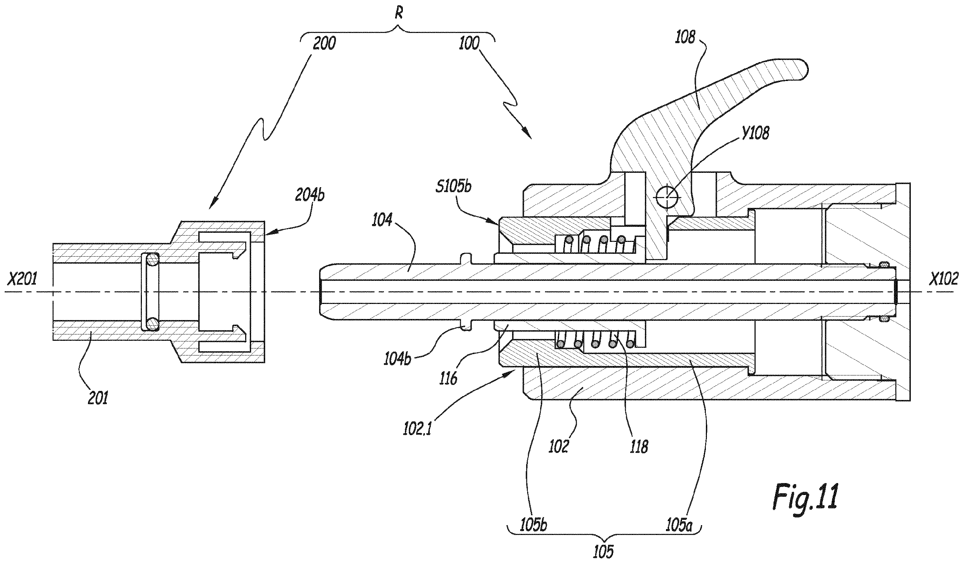

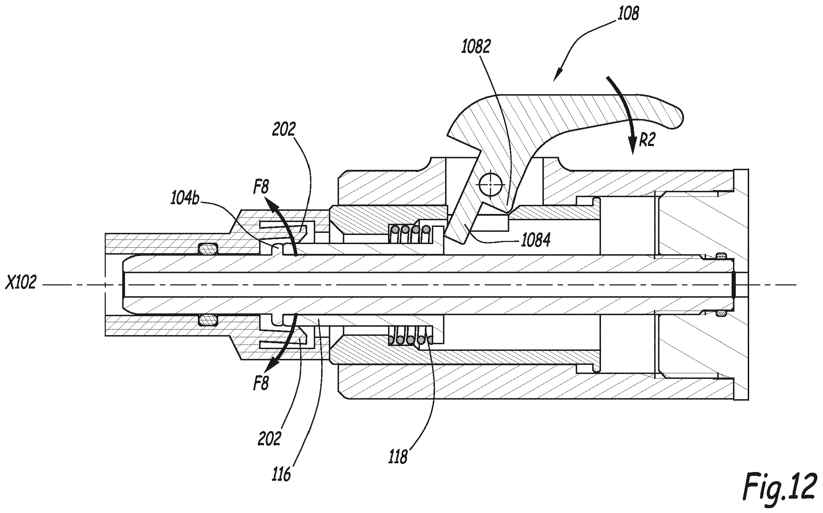

Sur les figures 11 et 12 est représenté un deuxième mode de réalisation d'un élément mâle 100 appartenant à un raccord fluidique. Dans ce deuxième mode de réalisation, les éléments identiques par rapport au premier mode de réalisation conservent leurs références numériques, alors que les éléments qui diffèrent de celui du premier mode de réalisation portent d'autres références numériques. Le raccord fluidique de ce mode de réalisation fonctionne globalement comme celui des figures 1 à 9.

L'élément mâle 100 des figures 11 et 12 diffère de celui des figures 1 à 6 en ce que la bague de palpage et la bague de verrouillage sont monobloc et forment un même dispositif de verrouillage 105. Ce dispositif de verrouillage monobloc 105 comprend une première partie 105a, qui en position distale, empêche la manoeuvre de l'organe de commande 108 et une deuxième partie 105b, dite partie proximale, accessible à l'élément femelle 200 par l'embouchure 102.1 distale du corps 102. Durant l'accouplement, la surface d'extrémité distale S105b du dispositif 105 est donc repoussée axialement vers l'arrière directement par l'élément femelle 200 et à l'encontre de l'effort élastique E118 exercé par le ressort 118. Le désaccouplement s'effectue de manière analogue au premier mode de réalisation, c'est-à-dire qu'il convient de rapprocher un peu plus l'élément femelle 200 de l'élément mâle 100 pour pouvoir basculer le levier 108 et avancer le manchon « dégriffeur » 116. Le manchon 116 écarte alors les griffes 202 vers l'extérieur, comme représenté par les flèches F8 à la figure 12. L'opérateur peut alors retirer l'élément mâle 100 de l'élément femelle 200 sans risquer d'accrocher les griffes 202 par la collerette 104b. Le retour élastique du dispositif 105 en position distale s'effectue sous l'effet de l'effort E118 du ressort 118. Il n'y a donc pas besoin de prévoir un ressort supplémentaire à l'arrière de l'élément mâle 100, comme dans le premier mode de réalisation. La construction du raccord des figures 11 et 12 est donc plus simple.

Comme décrit ci-dessus, le désaccouplement du raccord R conforme au premier ou au second mode de réalisation est précédé d'une étape consistant à enfoncer l'élément mâle 100 davantage dans l'élément femelle 200, notamment selon une distance d4, pour reculer le dispositif 105 suffisamment axialement en arrière afin de pouvoir manoeuvrer l'organe de commande 108. En effet, il faut que l'ouverture 0106 pratiquée dans le dispositif 105 soit au même niveau que l'organe de commande 108 pour que ce dernier soit manoeuvrable. Or, si les griffes 202 sont trop courtes, l'utilisateur risque de ne pas pouvoir atteindre cette distance d4 nécessaire au déverrouillage car la collerette 104b viendrait en butée contre l'élément femelle 200 et s'opposerait ainsi au mouvement d'enfoncement de l'élément mâle 100 dans l'élément femelle 200.

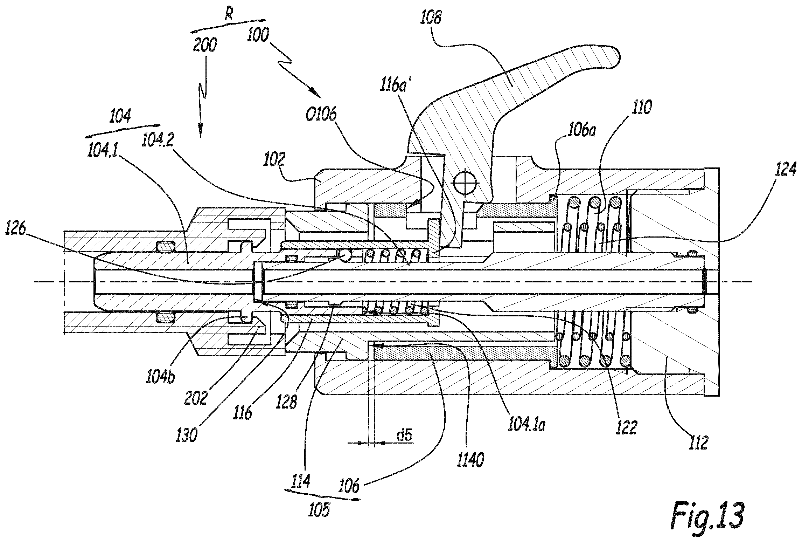

C'est à cette possible limitation qu'entend remédier l'élément mâle 100 selon un troisième mode de réalisation, qui est représenté aux figures 13 à 15. Cet élément mâle 100 est donc prévu pour coopérer avec un élément femelle 200 à griffes courtes. Dans ce troisième mode de réalisation, les éléments identiques par rapport au premier ou au deuxième mode de réalisation conservent leurs références numériques, alors que les éléments qui diffèrent de ceux des deux premiers modes de réalisation portent d'autres références numériques. Le raccord fluidique de ce mode de réalisation fonctionne globalement comme celui des figures 1 à 12.

L'élément mâle 100 conforme au troisième mode de réalisation comporte une fiche tubulaire 104 qui est bipartite. La fiche 104 comprend en effet une partie proximale 104.2 et une partie distale 104.1 qui est en partie emmanchée autour de la partie proximale 104.2. La partie proximale 104.2 de la fiche 104 est solidaire de la pièce de centrage 112, elle-même fixée au corps 102. La partie distale 104.1 est mobile axialement, par rapport à la partie proximale 104.2, entre une position avancée et une position reculée. Elle est donc mobile par rapport au corps 102, et porte la collerette 104b. Sa mobilité lui permet son rapprochement avec le corps 102. Elle est radialement interposée entre la partie proximale 104.2 de la fiche et le manchon 116.

L'élément mâle 100 comprend des moyens de blocage dans une configuration de rapprochement maximal des deux parties de la fiche 104. Autrement dit, ces moyens empêchent le rapprochement des deux parties 104.1 et 104.2 de la fiche 104 au-delà d'une certaine course. Ces moyens comprennent un épaulement interne 130, qui réduit le diamètre de l'alésage interne de la partie distale 104.1 en allant vers l'avant. Cet épaulement interne 130 s'oppose au rapprochement axial des parties 104.1 et 104.2 lorsqu'il bute contre une face d'extrémité distale 104.2b de la partie proximale 104.2 de la fiche 104. Il existe donc une possibilité de mouvement axial relatif entre les parties 104.1 et 104.2. L'amplitude de ce mouvement correspond au jeu axial d7 entre l'épaulement 130 de la partie 104.1 et la face d'extrémité distale 104.2b de la partie 104.2 lorsque la bille 126 en en butée contre une surépaisseur 128. On parle d'une fiche rétractable, ou télescopique.

L'élément mâle 100 comprend un organe 126 de butée de la partie distale 104.1 dans sa position avancée qui revient à une configuration d'écartement maximal, cet écartement maximal correspondant au jeu axial d7, c'est-à-dire à la distance d'écartement entre la position avancée et la position reculée de la partie distale 104.1. Cet organe comprend au moins une bille 126 de butée, qui est reçue dans un logement de la partie distale 104.1. Ce logement est une ouverture radiale de dimension complémentaire du diamètre de la bille 126, qui peut éventuellement autoriser un jeu axial de la bille dans son logement. La bille 126 fait saillie radialement vers l'intérieur par rapport à l'alésage de la partie distale 104.1 et coopère avec une surépaisseur 128 ménagée sur une surface externe de la partie proximale 104.2. Dans sa position avancée, la partie distale de la fiche se situe en butée contre la bille qui se positionne elle-même en butée contre la partie proximale de la fiche. Plus précisément, la bille 126 empêche d'éloigner axialement les parties 104.1 et 104.2 l'une de l'autre lorsqu'elle bute contre la surépaisseur 128. La bille 126 est donc disposée à l'arrière de la surépaisseur 128. On peut noter que cette surépaisseur est visible sur la périphérie de la fiche de telle façon qu'il existe une collerette de butée.

L'élément mâle 100 comprend, en outre, un moyen de rappel, d'une part, de la partie distale 104.1 en position avancée, c'est-à-dire dans une position où la bille 126 est en butée contre la surépaisseur 128, et, d'autre part, du manchon 116 dans sa première position, c'est-à-dire en position d'accouplement. Ce moyen de rappel comprend un ressort hélicoïdal 122 intercalé entre une face d'extrémité proximale 104.1 a de la partie 104.1 et un épaulement interne 116a' appartenant au manchon de « dégriffage » 116. Plus précisément, cet épaulement 116a' est disposé à l'extrémité proximale du manchon 116. Le ressort 122 permet donc de maintenir les deux parties 104.1 et 104.2 de la fiche 104 écartées l'une de l'autre.

De manière analogue au premier mode de réalisation, l'élément mâle 100 comporte un dispositif 105 de verrouillage de l'organe de commande 108, comportant une bague de verrouillage 106 apte à coulisser à l'intérieur du corps 102 autour de la fiche tubulaire 104 entre une position distale, où elle empêche la manoeuvre de l'organe de commande 108, et une position proximale, où elle ne s'oppose pas à une manoeuvre de l'organe de commande 108 pour déplacer le manchon 116 de sa première vers sa deuxième position.

Le dispositif 105 comprend également une bague de palpage 114, qui est apte à coulisser à l'intérieur du corps autour de la fiche tubulaire 104 entre une position distale de la bague 106 et une position proximale de la bague 106. Elle présente en outre une extrémité 114b accessible à l'embouchure distale du corps 102. A la différence du premier mode de réalisation, la bague 114 se prolonge vers l'arrière, à l'intérieur de la bague 106. La bague 114 comprend un épaulement 1140 adapté pour venir en butée contre la face d'extrémité distale de la bague 106 lorsque la bague 114 est reculée. Cette bague 114 est donc apte à entraîner la bague de verrouillage 106 du dispositif 105 de sa position distale vers sa position proximale. En outre, l'élément mâle 100 comprend des moyens de rappel de la bague 114 en position distale. Ces moyens de rappel comprennent un ressort hélicoïdal 124 intercalé entre une face d'extrémité proximale de la bague 114 et la pièce de centrage 112. La bague 114 délimite enfin une ouverture, radialement alignée avec celle de la bague de verrouillage 106, pour le passage de l'organe de commande 108. L'ouverture de la bague 114 est assez large, de sorte que la bague 114 ne forme jamais un obstacle au basculement de l'organe de commande 108.

Le fonctionnement à l'accouplement du raccord R équipé de l'élément mâle 100 conforme au troisième mode de réalisation est identique à celui du raccord R comprenant l'élément mâle 100 selon le premier mode de réalisation. Ainsi, seules les étapes correspondant au désaccouplement du raccord R sont décrites ci-dessous par souci de concision.

A la différence du raccord R décrit aux figures 1 à 9, lors de la phase d'accouplement, la bague de palpage 114 de l'élément male 100 selon le troisième mode de réalisation ne rattrape pas le jeu axial d1 existant avec la bague de verrouillage 106 en configuration désaccouplée. En effet, le poussoir 204 est ici plus court que celui de l'élément femelle 200 décrit aux figures 1 à 10. En configuration accouplée, il y a donc un jeu axial d5 entre une face d'extrémité distale de la bague 106 et l'épaulement de la bague de palpage 114.

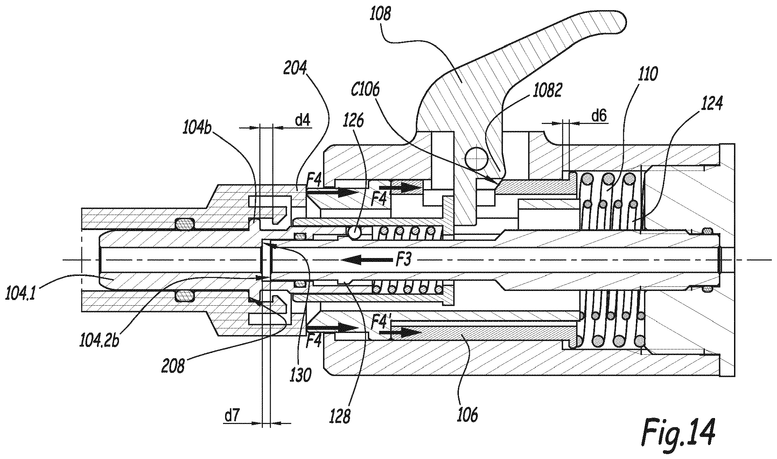

Pour désaccoupler le raccord R, l'utilisateur commence par enfoncer davantage l'élément mâle 100 à l'intérieur de l'élément femelle 200, comme représenté par la flèche F3 à la figure 14. Le poussoir 204 pousse alors la bague 114 au contact de la bague de verrouillage 106. Cela permet, dans un premier temps, de rattraper le jeu axial d5, et, dans un deuxième temps, de pousser la bague 106 vers l'arrière. Les griffes 202 sont dégagées axialement de la collerette 104b de la fiche 104. Comme les griffes 202 sont courtes, la collerette 104b vient rapidement au contact d'un épaulement 208 de l'élément femelle. Cette configuration est représentée à la figure 14. Dans cette configuration, le jeu d5 a été rattrapé et la bague 106 a été reculée d'une distance d6 mais elle n'est pas assez reculée pour laisser passer le talon 1082 de l'organe de manoeuvre 108. Autrement dit, dans cette position de contact de l'épaulement 208 avec la collerette 104b, le jeu d6 entre la couronne périphérique proximale 106a de la bague 106 et l'épaulement 102a du corps 102 n'est pas suffisant pour pouvoir basculer le levier 108 et commander le déplacement du manchon 116. Dans l'hypothèse où l'élément mâle 100 selon le premier mode de réalisation serait utilisé avec l'élément femelle 200 des figures 13 à 15, la première partie 106 du dispositif 105 de verrouillage n'atteindrait pas une position proximale suffisante : la manoeuvre de l'organe de commande 108 serait alors impossible et le raccord resterait bloqué en position accouplée.

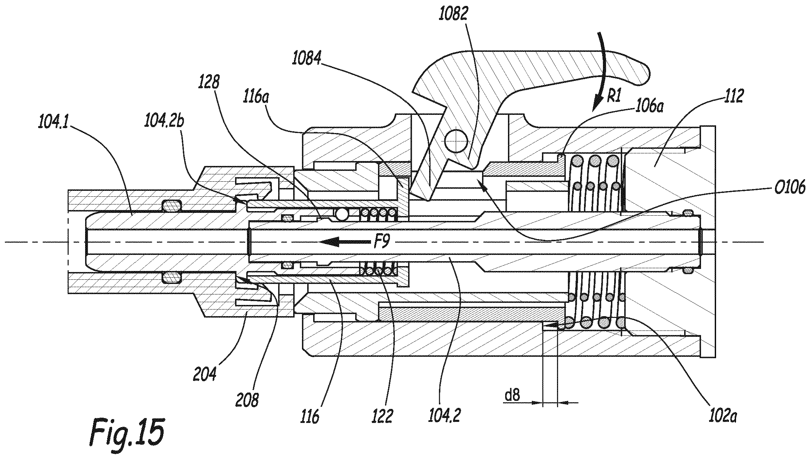

Cependant, avec le raccord R des figures 13 à 15, il est possible de rapprocher davantage les éléments mâle et femelle, comme représenté par la flèche F9 à la figure 15. En effet, ce rapprochement supplémentaire F9 entraine que la partie distale 104.1 de la fiche 104 recule au contact de l'élément femelle 200 car l'épaulement 208 de celui-ci est en butée contre la collerette 104b. Le recul de la partie distale 104.1 s'effectue à l'encontre de l'action élastique du ressort 122, c'est-à-dire que celui-ci est comprimé. Ce rapprochement supplémentaire F9, exercé par l'opérateur en forçant l'introduction de l'élément mâle dans l'élément femelle, entraine que le jeu axial d7 est rattrapé. Ainsi, ce jeu axial d7 forme une distance de surcourse nécessaire au désaccouplement. En parallèle, la bague de verrouillage 106 a également reculé, de sorte qu'il existe un jeu d8 entre la couronne proximale 106a de la bague 106 et l'épaulement 102a délimité dans le corps 202. Ce jeu d8 correspond à la somme des jeux d6 et d7 et est assez important pour libérer l'action de l'organe de commande 108. Le levier 108 peut donc être basculé, comme représenté par la flèche R1 à la figure 15. Ainsi, l'élément mâle 100 conforme au troisième mode de réalisation peut être utilisé avec une gamme plus importante d'éléments femelle, notamment avec un élément femelle à griffes courtes, c'est-à-dire que cet élément mâle est plus « tolérant » aux contraintes dimensionnelles de fabrication. Cet élément mâle peut également être utilisé avec un élément femelle dont le poussoir 204 est court.

En variante non représentée applicable au troisième mode de réalisation de l'élément mâle, la partie distale 104.1 de la fiche 104, c'est-à-dire la partie comportant la collerette 104b, est emmanchée en partie à l'intérieur de la partie proximale 104.2.

Selon une autre variante non représentée applicable au troisième mode de réalisation, l'emmanchement des parties 104.1 et 104.2 peut être effectué au moyen d'un système de guidage à cannelure ou à rainure. L'organe de butée 126 peut alors prendre la forme d'une goupille ou d'une clavette se substituant à et ayant la même fonction que la bille 126. L'organe de butée 126 peut indifféremment être fixé à la partie distale de la fiche, à la partie proximale de la fiche ou être libre entre les deux parties, en jouissant d'un débattement axial tel une bille dans un logement.

Selon une autre variante non représentée, applicable au troisième mode de réalisation, les parties 104.1 et 104.2 de la fiche 104 sont d'un seul tenant ou sont solidaires l'une de l'autre et la fiche 104 est mobile dans son intégralité à l'intérieur du corps 102. Dans ce cas, un ressort ou autre moyen de rappel est prévu pour maintenir la fiche en position avancée. La fiche 104 ne se rétracte donc dans le corps 102 que si une surcourse est nécessaire pour libérer l'organe de commande 108.

En variante non représentée applicable à tous les modes de réalisation, un organe de manoeuvre autre qu'un levier peut équiper le raccord R. Par exemple, l'organe de manoeuvre 108 peut être une bague extérieure, manoeuvrable axialement d'avant en arrière et agissant sur un système de levier interne à bascule pour pousser le manchon 116. Il est également envisageable d'utiliser un bouton poussoir radial, couplé à un système à coin pour pousser le manchon 116.

En variante non représentée applicable à tous les modes de réalisation, l'élément femelle 200 n'entre pas en contact avec la bague de palpage 114 à l'accouplement.

En variante non représentée applicable à tous les modes de réalisation, la seconde partie du dispositif de verrouillage pourrait ne pas dépasser du corps et toujours présenter une extrémité accessible à l'embouchure 102.1 du corps.

En variante non représentée applicable au premier et au dernier mode de réalisation de l'élément mâle, la bague de palpage 114 peut être remplacée par un ou plusieurs doigts « palpeurs », qui disposent d'au moins une butée en saillie, adaptée pour pousser la bague 106.

Selon une autre variante non représentée, applicable à tous les modes de réalisation, le manchon 116 est proche de la collerette 104b dans sa deuxième position si bien que le manchon est mobile entre une position éloignée et une position proche de la collerette, sans contact avec celle-ci.

Selon une autre variante non représentée, applicable au dernier mode de réalisation, un organe élastique de compression est en appui, d'une part, contre la bague de palpage 114 et, d'autre part, contre le manchon 116. Cet organe élastique assure alors le rappel de la bague 114 en position distale et le rappel du manchon dans sa première position. Par exemple, cet organe élastique est un ressort intercalé entre la collerette 116a du manchon 116 et un épaulement de la bague 114. Ceci revient à considérer qu'un ressort, du type du ressort 124, est intercalé axialement entre les pièces 114 et 116 et monté autour du manchon 116, d'une façon comparable au ressort 118 dans le premier mode de réalisation.

Selon une dernière variante non représentée, applicable aux deux premiers modes de réalisation, le ressort 118 est supprimé et est remplacé par un ressort disposé à l'arrière du dispositif 105. Ce ressort est alors en appui entre la pièce de centrage 112 et le dispositif 105.

Les caractéristiques techniques des variantes et modes de réalisation envisagés ci-dessus peuvent être combinées entre elles pour générer de nouveaux modes de réalisation de l'invention.

## Revendications

1. Elément mâle (100) de raccord fluidique (R), comprenant :
- un corps tubulaire (102), qui définit un axe central (X102) et une embouchure distale (102.1), et
- une fiche tubulaire (104) de passage du fluide, qui est disposée coaxialement à l'intérieur du corps et qui comporte une collerette (104b),
caractérisé en qu'il comprend en outre :
- un manchon (116), qui est mobile axialement autour de la fiche (104) entre une première position (figure 1; figure 11), où il est éloigné de la collerette (104b) et une deuxième position (figure 5; figure 12), où il est proche de ou en butée contre la collerette (104b),
- un organe (108) de commande du déplacement du manchon de sa première à sa deuxième position, et
- un dispositif (105) de verrouillage de l'organe de commande (108), comportant :
- une première partie (106 ; 105a) apte à coulisser à l'intérieur du corps (102) autour de la fiche tubulaire entre une position distale de la première partie (figure 2), où elle empêche la manoeuvre de l'organe de commande, et une position proximale de la première partie (figure 4), où elle ne s'oppose pas à une manoeuvre de l'organe de commande pour déplacer le manchon (116) de sa première vers sa deuxième position, et
- une deuxième partie (114; 105b), qui est apte à coulisser à l'intérieur du corps autour de la fiche tubulaire entre une position distale de la deuxième partie et une position proximale de la deuxième partie, qui est apte à entraîner la première partie (106 ; 105a) du dispositif de sa position distale vers sa position proximale et qui présente une extrémité (114b; S105b) accessible à l'embouchure (102.1) du corps.

2. Elément mâle selon la revendication 1, **caractérisé en ce que** l'organe de commande (108) comprend un levier articulé sur le corps autour d'un axe (Y108) orthoradial à l'axe central (X102) et **en ce que** le levier comprend un doigt (108c) de poussée du manchon (116) vers sa deuxième position, qui s'étend à travers une ouverture (0106) de la première partie (106 ; 105a) du dispositif de verrouillage (105).

3. Elément mâle selon la revendication 2, **caractérisé en ce que** le levier (108) comporte un talon (1082) de blocage du pivotement du levier, qui bute contre la première partie (106; 105a) du dispositif de verrouillage (105) lorsque celle-ci est en position distale.

4. Elément mâle selon l'une des revendications précédentes, **caractérisé en ce que** le manchon (116) a un diamètre extérieur (D116) supérieur au diamètre (D104) de la collerette (104b) de la fiche (104).

5. Elément mâle selon l'une des revendications précédentes, **caractérisé en ce que** la première partie du dispositif de verrouillage est une bague de verrouillage (106) et la deuxième partie du dispositif de verrouillage est une bague de palpage (114) qui est décalée axialement, le long de l'axe central (X102) par rapport à la bague de verrouillage (106), et qui est apte à repousser la bague de verrouillage vers sa position proximale, la bague de palpage (114) étant de préférence mobile axialement par rapport au corps (102) sans entraîner la bague de verrouillage (106) entre sa position distale et une position intermédiaire, où elle prend contact avec la bague de verrouillage (106).

6. Elément mâle selon la revendication 5, **caractérisé en ce qu'**il comprend un organe (110) exerçant un effort (E110) de rappel élastique de la bague de verrouillage (106) dans sa position distale.

7. Elément mâle selon l'une des revendications 1 à 6, **caractérisé en ce que** la fiche tubulaire (104) comprend une partie proximale (104.2) et une partie distale (104.1), portant la collerette (104b) et mobile axialement par rapport au corps (102) à l'encontre de l'effort de rappel d'un ressort (122) entre une position avancée et une position reculée.

8. Elément mâle selon la revendication 7, **caractérisé en ce que** la partie proximale (104.2) de la fiche est fixe par rapport au corps (102) et **en ce que** la fiche (104) comporte une bille (126) de butée de la partie distale (104.1) de la fiche dans sa position avancée.

9. Elément mâle selon l'une des revendications 1 à 4, **caractérisé en ce que** le dispositif de verrouillage est un ensemble monobloc constitué d'une première partie proximale (105a) et d'une deuxième partie distale (105b), l'ensemble étant mobile entre une position distale où la partie proximale du dispositif de verrouillage empêche la manoeuvre de l'organe de commande (108), et une position proximale où la partie proximale du dispositif ne s'oppose pas à une manoeuvre de l'organe de commande.

10. Elément mâle selon l'une quelconque des revendications précédentes, **caractérisé en ce qu'**il comprend un organe élastique (118 ; 124) de compression, qui est en appui entre, d'une part, la deuxième partie (114; 105b) du dispositif de verrouillage et, d'autre part, le manchon apte à assurer le rappel de la deuxième partie dans sa position distale et du manchon (116) dans sa première position.

11. Raccord fluidique (R), caractérisé en qu'il comporte un élément mâle suivant l'une des revendications 1 à 10 et un élément femelle (200) comportant au moins une griffe (202), ayant une surface (S202b) d'accrochage à la collerette (104b) de l'élément mâle, et en ce que le manchon (116) est apte à dégager la griffe lorsque celui-ci est déplacé de sa première vers sa deuxième position.

12. Raccord fluidique selon la revendication 11, **caractérisé en ce que** l'élément femelle (200) comprend un poussoir (204, 205), ayant une surface de poussée (204b ; 205b) de l'extrémité (114b; S105b) de la deuxième partie (114; 105b) du dispositif de verrouillage (105), cette extrémité étant accessible au poussoir à l'embouchure du corps.

13. Raccord fluidique (R) selon la revendication 12, **caractérisée en ce qu'**une distance (d2) entre la surface d'accrochage (S202b) et la surface de poussée (204b ; 205b) est supérieure à une distance (d3), mesurée parallèlement à l'axe central (X102), entre une face de blocage (S104b) appartenant à la collerette (104b) et la surface (114b) de contact, avec l'élément femelle (200), de la deuxième partie (104; 105b) du dispositif de verrouillage (105) dans sa position distale.

14. Raccord fluidique selon l'une des revendications 11 à 13, **caractérisé en ce que** la première partie (106; 105a) du dispositif de verrouillage (105) empêche la manoeuvre de l'organe de commande (108) lorsque la surface d'accrochage (S202b) de la griffe (202) est en prise avec la collerette (104b) de l'élément mâle (100).

15. Raccord fluidique selon l'une des revendications 11 à 14, **caractérisé en ce que** l'organe de commande (108) est manoeuvrable après rapprochement des éléments mâle (100) et femelle (200) par rapport à une configuration accouplée du raccord.

## Patentansprüche

1. Einsteckelement (100) einer Fluidkupplung (R), umfassend:
- einen rohrförmigen Körper (102), der eine Mittelachse (X102) und eine distale Einmündung (102.1) definiert, und
- ein rohrförmiges Steckelement (104) für den Durchlass des Fluids, das koaxial im Inneren des Körpers angeordnet ist und das einen Bund (104b) aufweist,
**dadurch gekennzeichnet, dass** es außerdem umfasst:
- eine Hülse (116), die axial um das Steckelement (104) zwischen einer ersten Position (Figur 1; Figur 11), in der sie von dem Bund (104b) entfernt ist, und einer zweiten Position (Figur 5; Figur 12), in der sie nahe zu dem Bund oder im Anschlag gegen den Bund (104b) liegt, beweglich ist,
- ein Organ (108) zur Steuerung der Verschiebung der Hülse aus ihrer ersten Position in ihre zweite Position, und
- eine Vorrichtung (105) zur Verriegelung des Steuerungsorgans (108), umfassend:
- ein erstes Teil (106; 105a), das geeignet ist, im Inneren des Körpers (102) um das rohrförmige Steckelement zwischen einer distalen Position des ersten Teils (Figur 2), in der es die Handhabung des Steuerungsorgans verhindert, und einer proximalen Position des ersten Teils (Figur 4), in der es sich nicht einer Betätigung des Steuerungsorgans zur Verschiebung der Hülse (116) aus ihrer ersten in ihre zweite Position entgegengestellt, zu gleiten, und
- ein zweites Teil (114; 105b), das geeignet ist, im Inneren des Körpers um das rohrförmige Steckelement zwischen einer distalen Position des zweiten Teils und einer proximalen Position des zweiten Teils, das in der Lage ist, das erste Teil (106; 105a) der Vorrichtung aus seiner distalen Position in seine proximale Position mitzunehmen, zu gleiten, und das ein Ende (114b; S105b) aufweist, das an der Einmündung (102.1) des Körpers zugänglich ist.

2. Einsteckelement nach Anspruch 1, **dadurch gekennzeichnet, dass** das Steuerungsorgan (108) einen an dem Körper um eine zur Mittelachse (X102) orthoradiale Achse (Y108) angelenkten Hebel umfasst und dass der Hebel einen Finger (108c) zum Schieben der Hülse (116) in ihre zweite Position umfasst, der sich durch eine Öffnung (0106) des ersten Teils (106; 105a) der Verriegelungsvorrichtung (105) erstreckt.

3. Einsteckelement nach Anspruch 2, **dadurch gekennzeichnet, dass** der Hebel (108) einen Absatz (1082) zum Sperren des Schwenkens des Hebels aufweist, der gegen das erste Teil (106; 105a) der Verriegelungsvorrichtung (105) anschlägt, wenn dieses in der distalen Position ist.

4. Einsteckelement nach einem der vorhergehenden Ansprüche, **dadurch gekennzeichnet, dass** die Hülse (116) einen Außendurchmesser (D116) aufweist, der größer als der Durchmesser (D104) des Bundes (104b) des Steckelements (104) ist.

5. Einsteckelement nach einem der vorhergehenden Ansprüche, **dadurch gekennzeichnet, dass** das erste Teil der Verriegelungsvorrichtung ein Verriegelungsring (106) ist, und das zweite Teil der Verriegelungsvorrichtung ein Abtastring (114) ist, der axial entlang der Mittelachse (X120) in Bezug auf den Verriegelungsring (106) versetzt ist, und der geeignet ist, den Verriegelungsring in seine proximale Position zu drücken, wobei der Abtastring (114) vorzugsweise axial in Bezug auf den Körper (102) zwischen seiner distalen Position und einer Zwischenposition, in der er mit dem Verriegelungsring (106) in Kontakt kommt, beweglich ist, ohne den Verriegelungsring (106) mitzunehmen.

6. Einsteckelement nach Anspruch 5, **dadurch gekennzeichnet, dass** es ein Element (110) umfasst, das eine Kraft (E110) zur elastischen Rückstellung des Verriegelungsrings (106) in seine distale Position ausübt.

7. Einsteckelement nach einem der Ansprüche 1 bis 6, **dadurch gekennzeichnet, dass** das rohrförmige Steckelement (104) ein proximales Teil (104.2) und ein distales Teil (104.1), das den Bund (104b) trägt und axial in Bezug auf den Körper (102) gegen die Rückstellkraft einer Feder (122) zwischen einer vorgerückten Position und einer zurückgezogenen Position beweglich ist, umfasst.

8. Einsteckelement nach Anspruch 7, **dadurch gekennzeichnet, dass** das proximale Teil (104.2) des Steckelements in Bezug auf den Körper (102) fest ist, und dass das Steckelement (104) eine Kugel (126) für den Anschlag des distalen Teils (104.1) des Steckelements in seiner vorgerückten Position aufweist.

9. Einsteckelement nach einem der Ansprüche 1 bis 4, **dadurch gekennzeichnet, dass** die Verriegelungsvorrichtung eine einstückige Einheit ist, die aus einem ersten proximalen Teil (105a) und einem zweiten distalen Teil (105b) gebildet ist, wobei die Einheit zwischen einer distalen Position, in der das proximale Teil der Verriegelungsvorrichtung die Betätigung des Steuerungsorgans (108) verhindert, und einer proximalen Position, in der das proximale Teil der Vorrichtung sich nicht einer Betätigung des Steuerungsorgans entgegenstellt, beweglich ist.

10. Einsteckelement nach einem beliebigen der vorhergehenden Ansprüche, **dadurch gekennzeichnet, dass** es ein elastisches Kompressionselement (118; 124) umfasst, das in Auflage zwischen einerseits dem zweiten Teil (114; 105b) der Verriegelungsvorrichtung und andererseits der Hülse ist, und das geeignet ist, die Rückstellung des zweiten Teils in seine distale Position und der Hülse (116) in ihre erste Position sicherzustellen.

11. Fluidkupplung (R), **dadurch gekennzeichnet, dass** sie ein Einsteckelement nach einem der Ansprüche 1 bis 10 und ein Aufnahmeelement (200) aufweist, das mindestens eine Kralle (202) mit einer Fläche (S202b) zum Verklinken mit dem Bund (104b) des Einsteckelements aufweist, und dass die Hülse (116) geeignet ist, die Kralle freizusetzen, wenn sie aus ihrer ersten Position in ihre zweite Position verschoben wird.

12. Fluidkupplung nach Anspruch 11, **dadurch gekennzeichnet, dass** das Aufnahmeelement (200) ein Drückerelement (204, 205) umfasst, das eine Schubfläche (204b, 205b) für das Endes (114b; S106b) des zweiten Teils (114; 105b) der Verriegelungsvorrichtung (105) aufweist, wobei dieses Ende für das Drückerelement an der Einmündung des Körpers zugänglich ist.

13. Fluidkupplung (R) nach Anspruch 12, **dadurch gekennzeichnet, dass** ein Abstand (d2) zwischen der Rastfläche (S202b) und der Schubfläche (204b; 205b) größer ist als ein parallel zur Mittelachse (X102) gemessener Abstand (d3) zwischen einer Blockierfläche (S104b), die zu dem Bund (104b) gehört, und einer Kontaktfläche mit dem Aufnahmeelement (200) des zweiten Teils (104; 105b) der Verriegelungsvorrichtung (105) in seiner distalen Position.

14. Fluidkupplung nach einem der Ansprüche 11 bis 13, **dadurch gekennzeichnet, dass** das erste Teil (106; 105a) der Verriegelungsvorrichtung (105) die Betätigung des Steuerorgans (108) verhindert, wenn die Rastfläche (S202b) der Kralle (202) mit dem Bund (104b) des Einsteckelements (100) im Eingriff ist.

15. Fluidkupplung nach einem der Ansprüche 11 bis 14, **dadurch gekennzeichnet, dass** das Steuerungsorgan (108) nach dem Annähern des Einsteckelements (100) und des Aufnahmeelements (200) in Bezug auf eine gekuppelte Stellung der Kupplung betätigbar ist.

## Claims

1. A male fluidic connecting (R) element (100), comprising:
- a tubular body (102), which defines a central axis (X102) and a distal mouth (102.1), and
- a tubular plug (104) for passage of the fluid, which is positioned coaxially inside the body and which includes a flange (104b),
**characterized in that** it further comprises:
- a sleeve (116), which is axially movable around the plug (104) between a first position (Fig. 1; Fig. 11), where it is away from the flange (104b) and a second position (Fig. 5; Fig. 12), where it is close to the flange (104b) or in abutment against the flange,
- a member (108) for controlling the displacement of the sleeve from its first to its second position, and
- a device (105) for locking the control member (108), including:
- a first portion (106; 105a) able to slide inside the body (102) around the tubular plug between a distal position of the first portion (Fig. 2), where it prevents maneuvering of the control member, and a proximal position of the first portion (Fig.4), where it does not oppose any maneuvering of the control member for displacing the sleeve (116) from its first to its second position, and
- a second portion (114; 105b), which is able to slide inside the body around the tubular plug between a distal position of the second portion and a proximal position of the second portion, which is able to drive the first portion (106; 105a) of the device from its distal position to its proximal position and which has an end (114b; S105b) accessible to the mouth (102.1) of the body.

2. The male element according to claim 1, **characterized in that** the control member (108) comprises a jointed lever on the body around an orthoradial axis (Y108) to the central axis (X102) and **in that** the lever comprises a finger (108c) for pushing the sleeve (116) towards its second position, which extends through an aperture (0106) of the first portion (106; 105a) of the locking device (105).

3. The male element according to claim 2, **characterized in that** the lever (108) includes a heel (1082) for blocking the pivoting of the lever, which abuts against the first portion (106; 105a) of the locking device (105) when the latter is in a distal position.

4. The male element according to one of the preceding claims, **characterized in that** the sleeve (116) has an outer diameter (D116) greater than the diameter (D104) of the flange (104b) of the plug (104).

5. The male element according to one of the preceding claims, **characterized in that** the first portion of the locking device is a locking ring (106) and the second portion of the locking device is a probing ring (114) which is axially shifted, along the central axis (X102) with respect to the locking ring (106), and which is able to push back the locking ring towards its proximal position, the probing ring (114) being preferably axially movable with respect to the body (102) without driving the locking ring (106) between its distal position and an intermediate position, where it contacts the locking ring (106).

6. The male element according to claim 5, **characterized in that** it comprises a member (110) exerting an elastic return force (E110) on the locking ring (106) in its distal position.

7. The male element according to one of claims 1 to 6, **characterized in that** the tubular plug (104) comprises a proximal portion (104.2) and a distal portion (104.1), bearing that the flange (104b) and axially movable with respect to the body (102) against the return force of a spring (122) between an advanced position and a set-back position.

8. The male element according to claim 7, **characterized in that** the proximal portion (104.2) of the plug is fixed with respect to the body (102) and **in that** the plug (104) includes a ball (126) for stopping the distal portion (104.1) of the plug in advanced position.

9. The male element according to one of claims 1 to 4, **characterized in that** the locking device is a one-piece assembly consisting of a first proximal portion (105a) and of a second distal portion (105b), the assembly being movable between a distal position where the proximal portion of the locking device prevents maneuvering of the control member (108), and a proximal position where the proximal portion does not oppose maneuvering of the control member.

10. The male element according to any of the preceding claims, **characterized in that** it comprises an elastic compressive member (118; 124), which is supported between the second portion (114; 105b) of the locking device on the one hand and, on the other hand, the sleeve, and which is able to ensure the return of the second portion into its distal position and of the sleeve (116) into its first position.

11. A fluidic connector (R), **characterized in that** it includes a male element according to one of claims 1 to 10 and a female element (200) including at least one claw (202), having a surface (S202b) for hooking up to the flange (104b) of the male element, and **in that** the sleeve (116) is able to disengage the claw when the latter is moved from its first to its second position.

12. The fluidic connector according to claim 11, **characterized in that** the female element (200) comprises a pusher (204, 205), having a pushing surface (204b; 205b) of the end (114b; S105b) of the second portion (114; 105b) of the locking device (105), this end being accessible to the pusher at the mouth of the body.

13. The fluidic connector (R) according to claim 12, **characterized in that** a distance (d2) between the hooking-up surface (S202b) and the pushing surface (204b; 205b) is greater than a distance (d3), measured in parallel with the central axis (X102), between a blocking face (S104b) belonging to the flange (104b) and a contact surface (114b) between the second portion (104; 105b) of the locking device (105) in its distal position and the female element (200).

14. The fluidic connector according to one of claims 11 to 13, **characterized in that** the first portion (106; 105a) of the locking device (105) prevents maneuvering of the control member (108) when the surface (S202b) for hooking up the claw (202) is engaged with the flange (104b) of the male element (100).

15. The fluidic connector according to one of claims 11 to 14, **characterized in that** the control member (108) is maneuverable after bringing the male (100) and female (200) closer to each other with respect to a coupled configuration of the connector.
